# EUROPÄISCHE PATENTANMELDUNG

(11) **EP 4 568 079 A1**
(43) Veröffentlichungstag der Anmeldung: **11.06.2025**
(21) Anmeldenummer: 24213855.0
(22) Anmeldetag: 19.11.2024
(51) Int. Cl.: H02K 7/00, F16D 1/104, F16D 1/10

(54) **ELEKTRISCHE ANTRIEBSVORRICHTUNG FÜR EIN FAHRZEUG UND VERFAHREN ZUM HERSTELLEN EINER ELEKTRISCHEN ANTRIEBSVORRICHTUNG FÜR EIN FAHRZEUG**

(30) Priorität: 05.12.2023 DE 102023212234
(71) Anmelder: Robert Bosch GmbH, 70442 Stuttgart (DE)
(72) Erfinder: Weissinger, Daniel, 70825 Korntal-Muenchingen (DE); Schlittenbauer, Tobias, 71732 Tamm (DE)

(57) **Zusammenfassung**

Die vorliegende Erfindung schafft eine elektrische Antriebsvorrichtung (10) für ein Fahrzeug (F), umfassend einen Rotor mit einer Rotorwelle (RW); ein Getriebe mit einer Getriebeeingangswelle (GW), wobei die Rotorwelle (RW) an einem ersten Bereich (RW1) eine erste Steckverzahnung (SZ1) und die Getriebeeingangswelle (GW) an einem zweiten Bereich (GW2) eine zweite Steckverzahnung (SZ2) umfasst, und der erste Bereich (RW1) mittels der ersten Steckverzahnung (SZ1) mit dem zweiten Bereich (GW2) mittels der zweiten Steckverzahnung (SZ2) verbindbar ist, wobei sich die erste Steckverzahnung (SZ1) an einer radialen Außenseite des ersten Bereichs (RW1) befindet und die Getriebeeingangswelle (GW) eine Hohlwelle ist und die zweite Steckverzahnung (SZ2) an einer Innenwand (IW) der Getriebeeingangswelle (GW) im zweiten Bereich (GW2) ausgeformt ist; und ein Verbindungselement (VP), welches an einem Vorsprungbereich (VB) an einem Ende des ersten Bereichs aufsetzbar ist und wobei das Verbindungselement (VP) in einem Hohlraum (HR) der Hohlwelle an einem Innensitz (IS) der Innenwand (IW) der Getriebeeingangswelle (GW) aufsetzbar ist, wodurch die Getriebeeingangswelle (GW) und die Rotorwelle (RW) axial zueinander fixierbar sind.

## Beschreibung

Die vorliegende Erfindung betrifft eine elektrische Antriebsvorrichtung für ein Fahrzeug und ein Verfahren zum Herstellen einer elektrischen Antriebsvorrichtung für ein Fahrzeug.

### Stand der Technik

Bei elektrischen Achsen für Fahrzeuge, beispielsweise bei PKWs oder leichten Nutzfahrzeug- Anwendungen, können diese üblicherweise als vollintegrierte Einheit bestehend aus einem elektrischen Motor, einer Leistungselektronik und einem Getriebe ausgeführt sein.

Eine Rotorwelle der elektrischen Maschine kann üblicherweise formschlüssig (z.B. über eine Steckverzahnung) mit der Getriebeeingangswelle verbunden sein und eine entsprechende Kraftübertragung erzielt werden.

Ein zugehöriges Lagersystem eines schnelldrehenden Wellenverbundes bei elektrischen Antriebsachsen für Elektro- und Hybridfahrzeuge kann aus zwei, drei oder vier Lagern bestehen, welche verteilt auf den E-Motor und das Getriebe sein können.

Es können drei Lager vorhanden sein, insbesondere zwei Lager im Getriebe, ein Lager in der Maschine (B-Lager) und Verbindungen der Wellen zur Momentenübertragung (z.B. Steckverzahnung), wobei eine Zentrierung der Wellen über die Steckverzahnung oder zusätzliche Zentrierfläche möglich sein kann; oder alternativ mit einer durchgehenden Welle realisierbar sein kann, oder ein Lager im Getriebe und zwei Lager in der Maschine (A- & B-Lager) und eine Verbindung der Wellen zur Momentenübertragung (z.B. Steckverzahnung) und einer Zentrierung der Wellen über die Steckverzahnung oder zusätzliche Zentrierfläche, wobei zusätzlich die Radialkraft aus der Laufverzahnung von der Getriebewelle auf die EM-Welle übertragen werden kann, was aber auch alternativ mit einer durchgehenden Welle realisierbar sein kann.

Bei gängigen E-Achsen kann eine Wellenanordnung vorhanden sein, wobei eine Rotorwelle mit einer Getriebeeingangswelle gekoppelt sein kann um ein Drehmoment zu übertragen, wobei die Wellenanordnung mit 3 oder 4 Wälzlagern gelagert sein kann, insbesondere angestellt, vorgespannt oder über eine fest-los-Lagerung oder durch Mischungen davon.

In der DE 10 2020 210 110 A1 wird eine Antriebseinheit für ein Fahrzeug beschrieben, welche eine elektrische Maschine mit einer Rotorwelle und einem Getriebe mit einer Getriebewelle umfasst, wobei die Getriebewelle mittels eines ersten Wälzlagers drehbar in einem ersten Gehäuseabschnitt gelagert ist und die Rotorwelle mittels eines zweiten Wälzlagers drehbar in einem zweiten Gehäuseabschnitt gelagert ist.

### Offenbarung der Erfindung

Die vorliegende Erfindung schafft eine elektrische Antriebsvorrichtung für ein Fahrzeug nach Anspruch 1 und ein Verfahren zum Herstellen einer elektrischen Antriebsvorrichtung für ein Fahrzeug nach Anspruch 12.

Bevorzugte Weiterbildungen sind Gegenstand der Unteransprüche.

### Vorteile der Erfindung

Die der vorliegenden Erfindung zugrunde liegende Idee besteht darin, die Verbindung zwischen einer Rotorwelle und einer Getriebeeingangswelle zu verbessern.

Es kann vorteilhaft eine möglichst kostengünstige Verbindung zwischen Rotorwelle und Getriebeeingangswelle hergestellt werden. Es kann vorteilhaft diese Verbindung derart ausgeführt sein, dass eine gemeinsame Zentrierung zum Gehäuse und der Wellen zueinander erfolgen kann. Vorteilhaft kann auch ein axiales Verblocken der beiden Komponenten erzielt werden, um eine Wahrscheinlichkeit eines axialen Verschiebens der Komponenten im Betrieb zu verringern oder dieses sogar zu verhindern.

Erfindungsgemäß umfasst die elektrische Antriebsvorrichtung für ein Fahrzeug, einen Rotor mit einer Rotorwelle; ein Getriebe mit einer Getriebeeingangswelle, wobei die Rotorwelle an einem ersten Bereich eine erste Steckverzahnung und die Getriebeeingangswelle an einem zweiten Bereich eine zweite Steckverzahnung umfasst, und der erste Bereich mittels der ersten Steckverzahnung mit dem zweiten Bereich mittels der zweiten Steckverzahnung verbindbar ist, wobei sich die erste Steckverzahnung an einer radialen Außenseite des ersten Bereichs befindet und die Getriebeeingangswelle eine Hohlwelle ist und die zweite Steckverzahnung an einer Innenwand der Getriebeeingangswelle im zweiten Bereich ausgeformt ist; und ein Verbindungselement, welches an einem Vorsprungbereich an einem Ende des ersten Bereichs aufsetzbar ist und wobei das Verbindungselement in einem Hohlraum der Hohlwelle an einem Innensitz der Innenwand der Getriebeeingangswelle aufsetzbar ist, wodurch die Getriebeeingangswelle und die Rotorwelle axial zueinander fixierbar sind.

Gemäß einer bevorzugten Ausführungsform der elektrischen Antriebsvorrichtung ist das Verbindungselement mit einer Klemmverbindung mit dem Vorsprungbereich des ersten Bereichs verbindbar.

Der erste und der zweite Bereich, in welchem die Steckverzahnung ausgebildet sein kann, können ein Ende der zugehörigen Welle betreffen, oder einen Bereich beabstandet vom Ende der zugehörigen Welle oder einen Mittelbereich der zugehörigen Welle.

Durch die Erfindung kann eine Verhinderung oder zumindest eine Verringerung einer axialen Bewegung des Rotors (der Rotorwelle) vom der Getriebeeingangswelle bei einer E-Achse mit einer Steckverzahung und einem drei Lagerkonzept erzielt werden. Auf diese Weise kann eine Verbesserung des NVH Verhaltens erreicht werden. Des Weiteren kann eine Reduktion des Einflusses von Einzeltoleranzen der Bauteile auf das Axialspiel des Rotors bei höheren Drehzahlen erreicht werden.

Für die Wellen kann ein Drei-Lagerkonzept mit der Rotorwelle und der Getriebeeingangswelle realisiert sein, wobei die beiden Wellen mittels der Steckverzahnungen und dem Verbindungselement verbunden sein können.

Der Innensitz der Innenwand kann ein radialer Vorsprung nach radial innen von der Innenwand der Getriebewelle sein, entweder an einer vorbestimmten axialen Stelle als Schulter oder Bund oder es kann sich dabei um den Rand der zweiten Steckverzahnung handeln, insbesondere jenem Rand, welcher dem Zentralbereich des Hohlraumes zugewandt und der Rotorwelle abgewandt sein kann. Das Verbindungselement kann dann einen Außenradius aufweisen, welcher sich über den Aufliegebereich des Innensitzes erstrecken kann, wodurch das Verbindungselement dann auf den Innensitz axial aufsetzbar und axial abstützbar ist.

Nach üblichen Konzepten kann eine Bewegung des Rotors (der Rotorwelle) in der axialen Richtung möglich sein, so kann die Rotorwelle bei Schocklasten in Y-Richtung (parallel zur axialen Richtung) aus der Getriebeeingangswelle rutschen oder die Wahrscheinlichkeit dazu zumindest vergrößert sein. Es kann in solchen üblichen Konzepten eine Spannfeder überdrückt werden.

Durch ein Ineinandergreifen der beiden Steckverzahnungen kann ein Drehmoment zwischen den Wellen übertragen werden.

Gemäß einer bevorzugten Ausführungsform der elektrischen Antriebsvorrichtung ist das Verbindungselement eine Klemmscheibe und der Vorsprungbereich ist ein zylindrischer Fortsatz der Rotorwelle, welcher sich von dem ersten Bereich zur Getriebeeingangswelle und in diese hinein erstreckt und ein Ende der Rotorwelle bildet und die Klemmscheibe auf den zylindrischen Fortsatz aufgesetzt ist.

Eine selbsthemmende Klemmscheibe ist ein Sicherungselement welches für axiale Verbindungen eingesetzt werden kann. Dabei kann sich die Scheibe einseitig axial auf einer Auflagefläche abstützen, auf der anderen Seite können sich Zacken des Elements auf einem Zylinder verklemmen und verhindern damit eine axiale Verschiebung der beiden zu verbindenden Teile.

Der Vorsprungsbereich kann sich axial über die erste Steckverzahnung hinaus zum Hohlraum hin erstrecken und beispielsweise einen geringeren Radius aufweisen als die erste Steckverzahnung. Die Klemmscheibe kann einen Innendurchmesser aufweisen, welcher geringfügig kleiner sein kann, als der Radius des Vorsprungbereichs und mit einem bestimmten Kraftaufwand auf den Vorsprungbereich aufgepresst werden. Der Außendurchmesser der Klemmscheibe kann auf den Innensitz oder eine Schulter oder Bund an der Getriebeeingangswelle axial aufsetzen.

Gemäß einer bevorzugten Ausführungsform der elektrischen Antriebsvorrichtung umfasst der zylindrische Fortsatz einen geringeren Radius als ein Außenradius der ersten Steckverzahnung.

Das an den Innensitz angelehnte Verbindungselement kann eine axiale Bewegung des Rotors im genannten Lagerkonzept verringern oder vermeiden und kann die Robustheit und das NVH Verhalten einer E-Achse verbessern.

Um den Aufbau der Erfindung erzielen zu können, brauchen vorteilhaft bestehende Montagekonzepte nur geringfügig angepasst zu werden, um den erfindungsgemäßen Fügeprozess erreichen und umsetzen zu können.

Gemäß einer bevorzugten Ausführungsform der elektrischen Antriebsvorrichtung ist der Innensitz durch einen axialen Rand der zweiten Steckverzahnung gebildet und das Verbindungselement stützt sich an dem axialen Rand der zweiten Steckverzahnung ab.

Gemäß einer bevorzugten Ausführungsform der elektrischen Antriebsvorrichtung umfasst diese eine erste Lagereinrichtung, mit welcher die Getriebeeingangswelle an einer Außenseite der Getriebeeingangswelle radial und/oder zumindest in eine Richtung axial fixierbar und lagerbar ist.

Gemäß einer bevorzugten Ausführungsform der elektrischen Antriebsvorrichtung umfasst diese eine zweite Lagereinrichtung, welche an einem Übergang zwischen der Rotorwelle und der Getriebeeingangswelle positionierbar ist und mit welcher die Getriebeeingangswelle und die Rotorwelle jeweils an einer Außenseite radial und/oder zumindest in eine Richtung axial fixierbar und lagerbar ist.

Gemäß einer bevorzugten Ausführungsform der elektrischen Antriebsvorrichtung umfasst diese eine dritte Lagereinrichtung, welche an einem zweiten Ende der Rotorwelle, welches dem ersten Bereich abgewandt ist, positionierbar ist und mit welcher die Rotorwelle an einer Außenseite der Rotorwelle radial fixierbar und/oder zumindest in eine Richtung axial vorspannbar und lagerbar ist.

Das generelle Lagerkonzept kann auch anders umgesetzt sein.

Gemäß einer bevorzugten Ausführungsform der elektrischen Antriebsvorrichtung umfasst diese eine erste Federeinrichtung, welche an dem zweiten Ende der Rotorwelle angeordnet ist und mit welcher die Rotorwelle in eine bestimmte axiale Position und Richtung vorspannbar ist.

Gemäß einer bevorzugten Ausführungsform der elektrischen Antriebsvorrichtung ist das Verbindungselement derart an dem ersten Bereich fixierbar, dass das Verbindungselement gegenüber einer vorbestimmten Haltekraft unverschiebbar an der Rotorwelle verbleibt.

Es kann vorteilhaft eine vorbestimmte Festigkeit der axialen Fixierung der Rotorwelle und der Getriebeeingangswelle aneinander erzielt werden.

Gemäß einer bevorzugten Ausführungsform der elektrischen Antriebsvorrichtung weist das Verbindungselement in radialem Umlauf vorbestimmte Öffnungen auf, durch welche ein Ölfluss in die erste Steckverzahnung und/oder in die zweite Steckverzahnung ermöglicht ist.

Nach der Erfindung kann so die erste und/oder zweite Steckverzahnung mit dem Getriebeöl versorgt, insbesondere benetzt, werden, um ein Trockenlaufen der Verzahnung zu verhindern oder zumindest zu verringern und somit einen Verschleiß zu verringern.

Durch geeignet gewählte Öffnungen an der Klemmscheibe kann weiterhin eine Ölzuführung der Steckverzahnung gewährleistet werden.

Es kann die elektrische Antriebsvorrichtung mit einer elektrischen Maschine im Gehäuse einer elektrischen Achse umfasst sein.

Die elektrische Achse kann vorteilhaft einfach und kompakt in dem Fahrzeug verbaut werden.

Durch die elektrische Antriebsvorrichtung kann eine nahezu spielfreie Verbindung (axial) der Rotorwelle mit der Getriebeeingangswelle ermöglicht sein. Durch das selbsthemmende Prinzip kann die Montagekraft der Klemmscheibe sehr viel niedriger sein als die Haltekraft. Die Klemmscheibe kann gegenüber anderen solchen Verbindungselementen leichter und günstiger sein.

Erfindungsgemäß erfolgt bei dem Verfahren zum Herstellen einer elektrischen Antriebsvorrichtung für ein Fahrzeug, ein Bereitstellen eines Rotors mit einer Rotorwelle; ein Bereitstellen eines Getriebes mit einer Getriebeeingangswelle, wobei die Rotorwelle an einem ersten Bereich eine erste Steckverzahnung und die Getriebeeingangswelle an einem zweiten Bereich eine zweite Steckverzahnung umfasst, und der erste Bereich mittels der ersten Steckverzahnung mit dem zweiten Bereich mittels der zweiten Steckverzahnung verbunden wird, wobei sich die erste Steckverzahnung an einer radialen Außenseite des ersten Bereichs befindet und die Getriebeeingangswelle eine Hohlwelle ist und die zweite Steckverzahnung an einer Innenwand der Getriebeeingangswelle im zweiten Bereich ausgeformt ist; und ein Bereitstellen eines Verbindungselements, welches an einem Vorsprungbereich an einem Ende des ersten Bereichs aufgesetzt wird und wobei das Verbindungselement in einem Hohlraum der Hohlwelle an einem Innensitz der Innenwand der Getriebeeingangswelle aufgesetzt wird, wodurch die Getriebeeingangswelle und die Rotorwelle axial zueinander fixiert werden.

Durch ein erfindungsgemäß geteiltes Wellendesign kann im Vergleich zu einem einteiligen Design eine Vielzahl von Vorteilen erzielt werden, wobei beanspruchungsgerechte Werkstoffe beider Wellen (und gleichzeitig geringere Masse für Wärmebehandlung) anwendbar sein können.

Das Verfahren kann sich vorteilhaft auch durch die bereits genannten Merkmale der elektrischen Antriebsvorrichtung auszeichnen und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand den in den schematischen Figuren der Zeichnung angegebenen Ausführungsbeispiele näher erläutert.

Es zeigen:
- Fig. 1: eine schematische Darstellung einer elektrischen Antriebsvorrichtung gemäß einem Ausführungsbeispiel der vorliegenden Erfindung;
- Fig. 2: eine schematische Darstellung einer Rotorwelle, die axial in einer Getriebeeingangswelle fixiert ist gemäß einem Ausführungsbeispiel der vorliegenden Erfindung;
- Fig. 3: eine schematische Darstellung einer Draufsicht auf eine Rotorwelle in einer Getriebeeingangswelle aus axialer Richtung gemäß einem Ausführungsbeispiel der vorliegenden Erfindung;
- Fig. 4: eine schematische Darstellung eines Ölflusses in einer elektrischen Antriebsvorrichtung gemäß einem Ausführungsbeispiel der vorliegenden Erfindung;
- Fig. 5: eine Blockdarstellung von Verfahrensschritten eines Verfahrens zum Herstellen einer elektrischen Antriebsvorrichtung gemäß einem Ausführungsbeispiel der vorliegenden Erfindung.

In den Figuren bezeichnen gleiche Bezugszeichen gleiche bzw. funktionsgleiche Elemente.

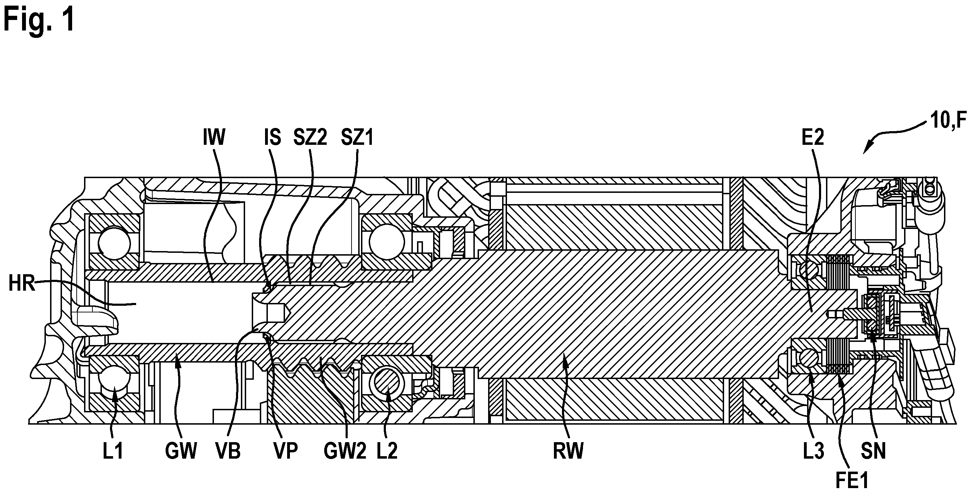

Fig. 1 zeigt eine schematische Darstellung einer elektrischen Antriebsvorrichtung gemäß einem Ausführungsbeispiel der vorliegenden Erfindung.

Die elektrische Antriebsvorrichtung 10 für ein Fahrzeug umfasst einen Rotor mit einer Rotorwelle RW; ein Getriebe mit einer Getriebeeingangswelle GW, wobei die Rotorwelle RW an einem ersten Bereich RW1 eine erste Steckverzahnung SZ1 und die Getriebeeingangswelle GW an einem zweiten Bereich GW2 eine zweite Steckverzahnung SZ2 umfasst, und der erste Bereich RW1 mittels der ersten Steckverzahnung SZ1 mit dem zweiten Bereich GW2 mittels der zweiten Steckverzahnung SZ2 verbindbar ist, wobei sich die erste Steckverzahnung SZ1 an einer radialen Außenseite des ersten Bereichs RW1 befindet und die Getriebeeingangswelle GW eine Hohlwelle ist und die zweite Steckverzahnung SZ2 an einer Innenwand IW der Getriebeeingangswelle GW im zweiten Bereich GW2 ausgeformt ist; und ein Verbindungselement VP, welches an einem Vorsprungbereich VB an einem Ende des ersten Bereichs aufsetzbar ist und wobei das Verbindungselement VP in einem Hohlraum HR der Hohlwelle an einem Innensitz IS der Innenwand IW der Getriebeeingangswelle GW aufsetzbar ist, wodurch die Getriebeeingangswelle GW und die Rotorwelle RW axial zueinander fixierbar sind.

Der Innensitz IS kann einfach der Rand der zweiten Steckverzahnung SZ2 sein.

Das Verbindungselement VP kann eine Klemmscheibe sein und der Vorsprungbereich VB kann ein zylindrischer Fortsatz der Rotorwelle RW sein, welcher sich von dem ersten Bereich RW1 zur Getriebeeingangswelle GW und in diese hinein erstrecken kann und ein Ende der Rotorwelle RW bilden kann und die Klemmscheibe auf den zylindrischen Fortsatz aufgesetzt sein kann. Vorteilhaft kann der zylindrische Fortsatz einen geringeren Radius umfassen als ein Außenradius der ersten Steckverzahnung SZ1.

Die elektrische Antriebsvorrichtung kann eine erste Lagereinrichtung L1 umfassen, mit welcher die Getriebeeingangswelle GW an einer Außenseite der Getriebeeingangswelle GW radial und/oder zumindest in eine Richtung axial fixierbar und lagerbar sein kann.

Die elektrische Antriebsvorrichtung kann eine zweite Lagereinrichtung L2 umfassen, welche an einem Übergang zwischen der Rotorwelle RW und der Getriebeeingangswelle GW positionierbar sein kann und mit welcher die Getriebeeingangswelle GW und die Rotorwelle RW jeweils an einer Außenseite radial und/oder zumindest in eine Richtung axial fixierbar und lagerbar sein kann.

Die Getriebeeingangswelle GW kann daher mittels zweier vorgespannter Lagereinrichtungen L1 und L2, beispielsweise Kugellager, in axialer Anordnung der Wellen gelagert sein.

Die elektrische Antriebsvorrichtung kann eine dritte Lagereinrichtung L3 umfassen, welche an einem zweiten Ende E2 der Rotorwelle RW, welches dem ersten Bereich RW1 abgewandt sein kann, positionierbar sein kann und mit welcher die Rotorwelle RW an einer Außenseite radial fixierbar und/oder zumindest in eine Richtung axial vorspannbar und lagerbar sein kann. Des Weiteren kann die elektrische Antriebsvorrichtung eine erste Federeinrichtung FE1 umfassen, welche an dem zweiten Ende E2 der Rotorwelle RW angeordnet sein kann und mit welcher die Rotorwelle RW in eine bestimmte axiale Position und Richtung vorspannbar sein kann. Am zweiten Ende E2 kann ein Sensor SN (beispielsweise ein magnetischer Geber- oder Winkelsensor) vorhanden sein.

Die dritte Lagereinrichtung L3, beispielsweise ein Kugellager, kann mittels der Federeinrichtung FE1, beispielsweise einer Wellenfeder, gegen die axiale Richtung der anderen beiden Lager angestellt (vorgespannt) sein.

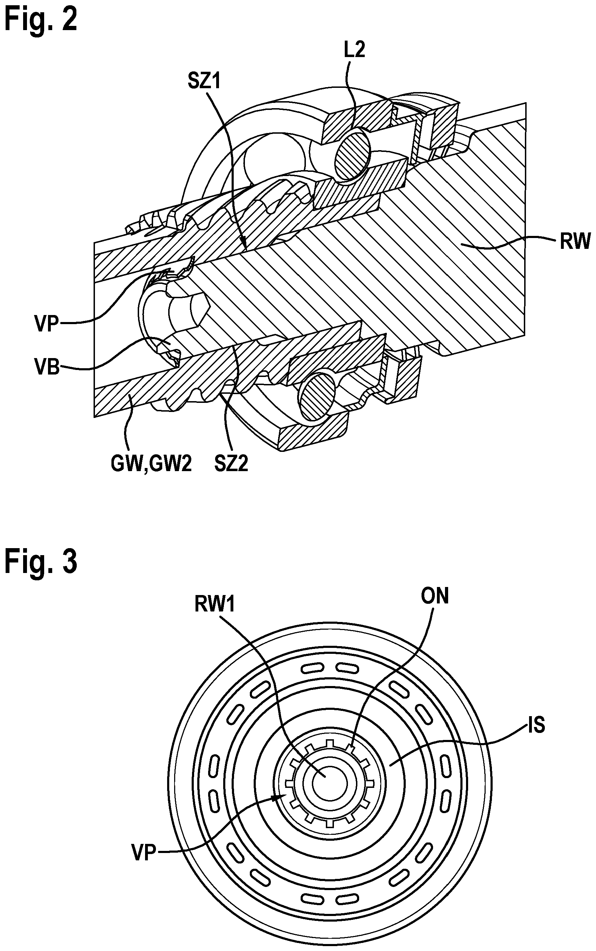

Fig. 2 zeigt eine schematische Darstellung einer Rotorwelle, die axial in einer Getriebeeingangswelle fixiert ist gemäß einem Ausführungsbeispiel der vorliegenden Erfindung.

Die Fig. 2 zeigt einen Teilabschnitt der Fig. 1, wobei der Bereich des Ineinandersteckens der Rotorwelle RW mit der Getriebeeingangswelle GW und deren zweiten Bereich GW2 gezeigt ist, etwa an dem zweiten Lager L2, insbesondere mit einem senkrechten Schnitt durch die Wellenmitte. Nach der Fig. 2 ist zu sehen, dass der Innensitz IS durch einen axialen Rand der zweiten Steckverzahnung SZ2 gebildet sein kann und sich das Verbindungselement VP an dem axialen Rand der zweiten Steckverzahnung SZ2 abstützten kann. Es kann das Verbindungselement VP derart an dem ersten Bereich RW1 fixierbar sein, dass das Verbindungselement VP gegenüber einer vorbestimmten Haltekraft unverschiebbar an der Rotorwelle RW verbleibt. Es ist im weiteren Detail gezeigt, dass das Verbindungselement VP eine Klemmscheibe sein kann und der Vorsprungbereich VB kann ein zylindrischer Fortsatz der Rotorwelle RW sein, welcher sich von dem ersten Bereich RW1 zur Getriebeeingangswelle GW und in diese hinein erstrecken kann und ein Ende der Rotorwelle RW bilden kann und die Klemmscheibe auf den zylindrischen Fortsatz aufgesetzt sein kann.

Es können unterschiedliche Varianten der Klemmscheibe möglich sein. Das generelle Lagerkonzept kann auch anders umgesetzt sein. Die Außengeometrie der Klemmscheibe kann zusätzlich Öffnungen zur Optimierung des Ölflusses besitzen.

Fig. 3 zeigt eine schematische Darstellung einer Draufsicht auf eine Rotorwelle in einer Getriebeeingangswelle aus axialer Richtung gemäß einem Ausführungsbeispiel der vorliegenden Erfindung.

Die axiale Draufsicht auf das Verbindungselement VP als Klemmscheibe und auf den Vorsprungbereich als zylindrischer Fortsatz der Rotorwelle RW zeigt die Klemmscheibe mit mehreren Öffnungen ON im radialen Umlauf der Klemmscheibe.

Durch die Öffnungen ON kann ein Ölfluss in die erste Steckverzahnung und/oder in die zweite Steckverzahnung aus axialer Richtung (durch die Getriebeeingangswelle) ermöglicht sein. In der Fig. 3 ist auch gezeigt, dass die Klemmscheibe sich teilweise radial auf den Innensitz IS hinauferstrecken kann.

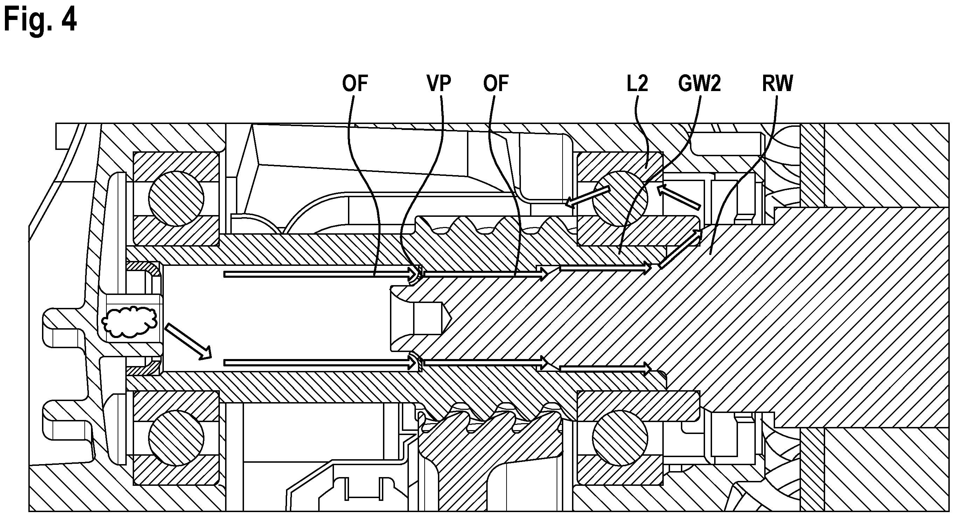

Fig. 4 zeigt eine schematische Darstellung eines Ölflusses in einer elektrischen Antriebsvorrichtung gemäß einem Ausführungsbeispiel der vorliegenden Erfindung.

In der Fig. 4 ist der Ölfluss OF durch die Pfeildarstellung gezeigt. Das Öl kann durch die Getriebeeingangswelle fließen, durch die Öffnungen in der Klemmscheibe und entlang der Steckverzahnungen. In weiterer Folge kann es zwischen den Kontaktbereichen der Rotorwelle RW und der Getriebeeingangswelle GW2 durch die zweite Lagereinrichtung L2 fließen.

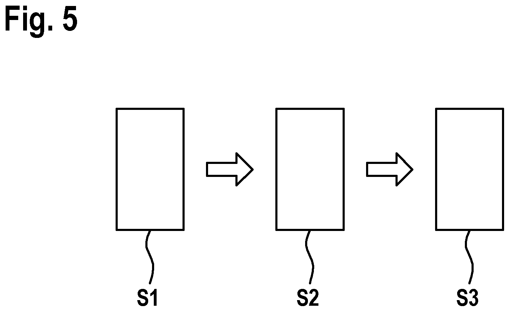

Fig. 5 zeigt eine Blockdarstellung von Verfahrensschritten eines Verfahrens zum Herstellen einer elektrischen Antriebsvorrichtung gemäß einem Ausführungsbeispiel der vorliegenden Erfindung.

Bei dem Verfahren zum Herstellen einer elektrischen Antriebsvorrichtung für ein Fahrzeug, erfolgt ein Bereitstellen S1 eines Rotors mit einer Rotorwelle; ein Bereitstellen S1 eines Rotors mit einer Rotorwelle; ein Bereitstellen S2 eines Getriebes mit einer Getriebeeingangswelle, wobei die Rotorwelle an einem ersten Bereich eine erste Steckverzahnung und die Getriebeeingangswelle an einem zweiten Bereich eine zweite Steckverzahnung umfasst, und der erste Bereich mittels der ersten Steckverzahnung mit dem zweiten Bereich mittels der zweiten Steckverzahnung verbunden wird, wobei sich die erste Steckverzahnung an einer radialen Außenseite des ersten Bereichs befindet und die Getriebeeingangswelle eine Hohlwelle ist und die zweite Steckverzahnung an einer Innenwand der Getriebeeingangswelle im zweiten Bereich ausgeformt ist; und ein Bereitstellen S3 eines Verbindungselements, welches an einem Vorsprungbereich an einem Ende des ersten Bereichs aufgesetzt wird und wobei das Verbindungselement in einem Hohlraum der Hohlwelle an einem Innensitz der Innenwand der Getriebeeingangswelle aufgesetzt wird, wodurch die Getriebeeingangswelle und die Rotorwelle axial zueinander fixiert werden.

Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar.

## Patentansprüche

1. Elektrische Antriebsvorrichtung (10) für ein Fahrzeug (F), umfassend:
- einen Rotor mit einer Rotorwelle (RW);
- ein Getriebe mit einer Getriebeeingangswelle (GW), wobei die Rotorwelle (RW) an einem ersten Bereich (RW1) eine erste Steckverzahnung (SZ1) und die Getriebeeingangswelle (GW) an einem zweiten Bereich (GW2) eine zweite Steckverzahnung (SZ2) umfasst, und der erste Bereich (RW1) mittels der ersten Steckverzahnung (SZ1) mit dem zweiten Bereich (GW2) mittels der zweiten Steckverzahnung (SZ2) verbindbar ist, wobei sich die erste Steckverzahnung (SZ1) an einer radialen Außenseite des ersten Bereichs (RW1) befindet und die Getriebeeingangswelle (GW) eine Hohlwelle ist und die zweite Steckverzahnung (SZ2) an einer Innenwand (IW) der Getriebeeingangswelle (GW) im zweiten Bereich (GW2) ausgeformt ist; und
- ein Verbindungselement (VP), welches an einem Vorsprungbereich (VB) an einem Ende des ersten Bereichs aufsetzbar ist und wobei das Verbindungselement (VP) in einem Hohlraum (HR) der Hohlwelle an einem Innensitz (IS) der Innenwand (lW) der Getriebeeingangswelle (GW) aufsetzbar ist, wodurch die Getriebeeingangswelle (GW) und die Rotorwelle (RW) axial zueinander fixierbar sind.

2. Elektrische Antriebsvorrichtung (10) nach Anspruch 1, bei welcher das Verbindungselement (VP) mit einer Klemmverbindung mit dem Vorsprungbereich (VB) des ersten Bereichs (RW1) verbindbar.

3. Elektrische Antriebsvorrichtung (10) nach Anspruch 1 oder 2, bei welcher das Verbindungselement (VP) eine Klemmscheibe ist und der Vorsprungbereich (VB) ein zylindrischer Fortsatz der Rotorwelle (RW) ist, welcher sich von dem ersten Bereich (RW1) zur Getriebeeingangswelle (GW) und in diese hinein erstreckt und ein Ende der Rotorwelle (RW) bildet und die Klemmscheibe auf den zylindrischen Fortsatz aufgesetzt ist.

4. Elektrische Antriebsvorrichtung (10) nach Anspruch 3, bei welcher der zylindrische Fortsatz einen geringeren Radius umfasst als ein Außenradius der ersten Steckverzahnung (SZ1).

5. Elektrische Antriebsvorrichtung (10) nach einem der Ansprüche 1 bis 4, bei welcher der Innensitz (IS) durch einen axialen Rand der zweiten Steckverzahnung (SZ2) gebildet ist und sich das Verbindungselement (VP) an dem axialen Rand der zweiten Steckverzahnung (SZ2) abstützt.

6. Elektrische Antriebsvorrichtung (10) nach einem der Ansprüche 1 bis 5, welche eine erste Lagereinrichtung (L1) umfasst, mit welcher die Getriebeeingangswelle (GW) an einer Außenseite der Getriebeeingangswelle (GW) radial und/oder zumindest in eine Richtung axial fixierbar und lagerbar ist.

7. Elektrische Antriebsvorrichtung (10) nach einem der Ansprüche 1 bis 6, welche eine zweite Lagereinrichtung (L2) umfasst, welche an einem Übergang zwischen der Rotorwelle (RW) und der Getriebeeingangswelle (GW) positionierbar ist und mit welcher die Getriebeeingangswelle (GW) und die Rotorwelle (RW) jeweils an einer Außenseite radial und/oder zumindest in eine Richtung axial fixierbar und lagerbar ist.

8. Elektrische Antriebsvorrichtung (10) nach einem der Ansprüche 1 bis 7, welche eine dritte Lagereinrichtung (L3) umfasst, welche an einem zweiten Ende (E2) der Rotorwelle (RW), welches dem ersten Bereich (RW1) abgewandt ist, positionierbar ist und mit welcher die Rotorwelle (RW) an einer Außenseite radial fixierbar und/oder zumindest in eine Richtung axial vorspannbar und lagerbar ist.

9. Elektrische Antriebsvorrichtung (10) nach Anspruch 8, welche eine erste Federeinrichtung (FE1) umfasst, welche an dem zweiten Ende (E2) der Rotorwelle (RW) angeordnet ist und mit welcher die Rotorwelle (RW) in eine bestimmte axiale Position und Richtung vorspannbar ist.

10. Elektrische Antriebsvorrichtung (10) nach einem der Ansprüche 1 bis 9, bei welcher das Verbindungselement (VP) derart an dem ersten Bereich (RW1) fixierbar ist, dass das Verbindungselement (VP) gegenüber einer vorbestimmten Haltekraft unverschiebbar an der Rotorwelle (RW) verbleibt.

11. Elektrische Antriebsvorrichtung (10) nach einem der Ansprüche 1 bis 10, bei welcher das Verbindungselement (VP) in radialem Umlauf vorbestimmte Öffnungen aufweist, durch welche ein Ölfluss in die erste Steckverzahnung (SZ1) und/oder in die zweite Steckverzahnung (SZ2) ermöglicht ist.

12. Verfahren zum Herstellen einer elektrischen Antriebsvorrichtung (10) für ein Fahrzeug (F), umfassend die Schritte:
- Bereitstellen (S1) eines Rotors mit einer Rotorwelle (RW);
- Bereitstellen (S2) eines Getriebes mit einer Getriebeeingangswelle (GW), wobei die Rotorwelle (RW) an einem ersten Bereich (RW1) eine erste Steckverzahnung (SZ1) und die Getriebeeingangswelle (GW) an einem zweiten Bereich (GW2) eine zweite Steckverzahnung (SZ2) umfasst, und der erste Bereich (RW1) mittels der ersten Steckverzahnung (SZ1) mit dem zweiten Bereich (GW2) mittels der zweiten Steckverzahnung (SZ2) verbunden wird, wobei sich die erste Steckverzahnung (SZ1) an einer radialen Außenseite des ersten Bereichs (RW1) befindet und die Getriebeeingangswelle (GW) eine Hohlwelle ist und die zweite Steckverzahnung (SZ2) an einer Innenwand (lW) der Getriebeeingangswelle (GW) im zweiten Bereich (GW2) ausgeformt ist; und
- Bereitstellen (S3) eines Verbindungselements (VP), welches an einem Vorsprungbereich (VB) an einem Ende des ersten Bereichs aufgesetzt wird und wobei das Verbindungselement (VP) in einem Hohlraum (HR) der Hohlwelle an einem Innensitz (IS) der Innenwand (lW) der Getriebeeingangswelle (GW) aufgesetzt wird, wodurch die Getriebeeingangswelle (GW) und die Rotorwelle (RW) axial zueinander fixiert werden.
